# EUROPÄISCHE PATENTANMELDUNG

(11) **EP 1 536 213 A2**
(43) Veröffentlichungstag der Anmeldung: **01.06.2005**
(21) Anmeldenummer: 04026116.6
(22) Anmeldetag: 04.11.2004
(51) Int. Cl.: G01F 15/00, G01F 15/14

(54) **Befestigungsring für Wasserzähler**

(30) Priorität: 14.11.2003 DE 10353338
(71) Anmelder: Elster Messtechnik GmbH, 68623 Lampertheim (DE)
(72) Erfinder: Roger, Frank, Dipl.-Ing., 67378 Zeiskam (DE)
(74) Vertreter: Miller, Toivo

(57) **Zusammenfassung**

Die Erfindung betrifft einen Wasserzähler mit einem in einem Zählergehäuse (2) angeordneten Messeinsatz (4), mit je einem dem Zählergehäuse (2) zugeordneten Zulaufanschluss (10) und Ablaufanschluss (12) und mit einer Anzeigeeinrichtung (6), wobei dem Zählergehäuse (2) eine individuelle, gerätespezifische Kennzeichnung (28) zugeordnet ist, welche auf einem separaten Kennzeichnungsteil angegeben ist.

Das erfindungsgemäße Kennzeichnungsteil ist zweiteilig ausgebildet und aus einem Befestigungselement (A) und einem Kennzeichnungselement (B) zusammengesetzt. Das Befestigungselement (A) und das Kennzeichnungselement (B) sind dazu fest miteinander verbunden und das Befestigungselement (A) ist ein unlösbar mit dem Zählergehäuse (2) oder gegen ein nachträgliches Entfernen vom Zählergehäuse (2) gesichertes Teil.

## Beschreibung

Die Erfindung betrifft einen Wasserzähler, insbesondere einen Mehrstrahlwasserzähler, bestehend aus einem Zählergehäuse und einem darin untergebrachten Messwerk mit durch eine Sichtscheibe ablesbaren Anzeigeeinrichtung, wobei dem Zählergehäuse eine individuelle gerätsspezifische Kennzeichnung zugeordnet ist.

Gemäß der Eichordnung sind Wasserzähler mit bestimmten gerätespezifischen Angaben zu versehen. Zusätzlich können je nach Bedarf kundenspezifische Kennzeichnungen aufgebracht werden. Die gesetzlich notwendigen Kennzeichnungen sind so vorzusehen, dass eine Entfernung ohne sichtbare Beschädigung der Bauteile nicht möglich ist. Zu diesen notwendigen Kennzeichnungen gehört beispielsweise auch die Seriennummer, die üblicherweise auf den Gehäusekopf des Wasserzählers eingeritzt oder graviert wird.

Der aus der **DE 297 07 082 U1** bekannte Wasserzähler weist dazu ein die Kennzeichnung tragendes, ursprünglich separates, unlösbar bzw. gegen ein nachträgliches unbeabsichtigtes Entfernen gesichertes Kennzeichnungsteil auf.

Durch die einteilige Ausführung des Kennzeichnungsteils gestaltet sich die Montage des Kennzeichnungsteils als schwierig und aufwendig. Da das Kennzeichnungsteil schon bei der Montage des Zählers in das Zählergehäuse eingebaut wird, ist eine spätere nachträgliche Kennzeichnung von auf Vorrat produzierten Wasserzählern entsprechend der Bestellung des Wasserversorgungsunternehmens nicht mehr möglich.

Der Erfindung liegt demgemäss die **Aufgabe** zugrunde, einen Wasserzähler der eingangs genannten Art anzugeben, mit einem Kennzeichnungsteil, das unter Einhaltung amtlicher Vorschriften einfach gestaltet und zu einem beliebigen Zeitpunkt am Wasserzähler angebracht werden kann.

Diese Aufgabe wird erfindungsgemäß mit den in Anspruch 1 angegebenen Merkmalen gelöst. Vorteilhafte Ausgestaltungen und Verbesserungen der erfindungsgemäßen Vorrichtung sind in weiteren Ansprüchen und in der Beschreibung angegeben.

Erfindungsgemäß also umfasst der Wasserzähler ein separates zweiteiliges, bevorzugt ringförmiges, Kennzeichnungsteil, auf welchem eine dem Zählergehäuse zugeordnete individuelle, gerätespezifische Kennzeichnung aufgebracht ist, wobei das Kennzeichnungsteil aus einem, bevorzugt ringförmigen, Befestigungselement und einem, bevorzugt ringförmigen, Kennzeichnungselement gebildet ist.

Das Befestigungselement ist ein zunächst separates, unlösbar oder gegen ein nachträgliches Entfernen gesichertes Teil, welches mit dem Kennzeichnungselement, auf welchem die Kennzeichnung aufgebracht ist, mittels einer Kraftschluss- und /oder Formschlussverbindung, beispielsweise einer Rastverbindung, durch ein innenliegendes Einrasten oder ein axiales Einpressen des Kennzeichnungselements in das Befestigungselement, fest verbunden ist, das heißt Befestigungselement und Kennzeichnungselement bilden eine unlösbare Verbindung und können nicht ohne nachweisbare sichtbare Beschädigung voneinander getrennt werden.

Hierzu ist das Befestigungselement als Druck- und Gleitring zur Befestigung an einem flanschartigen Ringkragen eines Schraubrings ausgebildet, wodurch das Befestigungselement ein druckdichtes Verpressen mit dem Ringkragen des Schraubringes durch ein Festschrauben des Schraubringes sowie einen Schutz der Sichtscheibe beim Verpressen ermöglicht. Die Verwendung eines üblicherweise vorgesehenen zusätzlichen Druckringes zwischen dem Ringkragen und der Sichtscheibe ist damit nicht erforderlich und hinfällig.

Durch die formschlüssige Verbindung des Befestigungselementes mit dem Kennzeichnungselement ist das Kennzeichnungselement nicht zerstörungsfrei entfernbar, wodurch Manipulationen am Wasserzähler ausgeschlossen sind.

In einer weiteren vorteilhaften Ausführungsform der Erfindung ist das Kennzeichnungselement so ausgeführt, dass es in den Befestigungsring einlegbar und verdrehbar ist.
Durch die formschlüssige feste Verbindung des Befestigungselementes mit dem Kennzeichnungselement ist in vorteilhafter Weise eine federnde Verbindung zwischen der Sichtscheibe und dem Kennzeichnungselement vermieden, wodurch ein zerstörungsfreies Entfernen des Kennzeichnungsteils nicht mehr möglich ist.

Die zweiteilige Ausführung des Kennzeichnungsteils ermöglicht es in vorteilhafter Weise den Wasserzähler zunächst ohne eine zu Registrierzwecken geforderte Kennzeichnung vorzuproduzieren, da das Befestigungselement schon während der Zählermontage eingebaut wird und die individuelle, gerätespezifische Kennzeichnung, welche sich auf dem Kennzeichnungselement befindet, entsprechend der Bestellung des jeweiligen Wasserversorgungsunternehmens zu einem beliebigen späteren Zeitpunkt nachträglich aufbringbar ist. Damit wird eine hohe Flexibilität der Produktion der Wasserzähler erreicht.

Von besonderem Vorteil ist, dass bei einem branchenüblichen Aufbereiten von benutzten Wasserzählern, insbesondere beim Austausch des Messwerkes, nur das Kennzeichnungselement kostengünstig mit geringem Montageaufwand entfernt und durch ein neues Kennzeichnungselement ersetzbar ist. Dadurch ist eine Wiederverwendbarkeit der verschleißfreien Gehäuseteile gegeben, weil der aufbereitete Wasserzähler nur mit einem neuen Kennzeichnungselement zu versehen ist.

Das Kennzeichnungselement und das Befestigungselement sind vorzugsweise als kostengünstiges zweiteiliges Kunststoffspritzteil ausgebildet.

In einer besonders vorteilhaften Ausführungsform der Erfindung ist am Kennzeichnungselement über der Anzeigeeinrichtung eine Abdeckung angebracht, welche vorzugsweise als schwenkbarer Schutzdeckel oder Klappdeckel ausgeführt ist.

Um eine vollständige Überdeckung des Kenzeichnungsteils mittels der Abdeckung zu erreichen, sind die Abmessungen des Kennzeichnungselementes, insbesondere bezüglich seines Außendurchmessers, derart an den Schutzdeckel angepasst, dass der Schutzdeckel in seiner Verschlusslage das Kennzeichnungsteil vollständig überdeckt.

Die dem Zählergehäuse zugewandte mit dem Kennzeichnungselement verbundene Seite der Abdeckung ist in vorteilhafter Weise als weitere Kennzeichnungs- oder Beschriftungsfläche vorgesehen.

Im erfindungsgemäßen Wasserzähler weist das Befestigungselement gemäß einer weiteren Ausführungsform eine Form auf, die dem Einbau einer Halteplatte zur Aufnahme eines Kontakt- oder Pulsgebers zwischen der dem Kennzeichnungselement abgewandten Seite des Befestigungselementes und der Sichtscheibe erlaubt.

Anhand von in den Zeichnungsfiguren 1 bis 9 dargestellten Ausführungsbeispielen sollen die Erfindung sowie vorteilhafte Ausgestaltungen, Verbesserungen und weitere Vorteile der Erfindung näher erläutert und beschrieben werden.

Es zeigen:
- **Fig. 1**: einen Längsschnitt eines mit dem erfindungsgemäßen Kennzeichnungssteil ausgestatteten Wasserzählers (geschnittener Bereich entsprechend der Schnittlinie I - I in Fig. 2),
- **Fig. 2**: eine Teil-Draufsicht auf eine Mess- und Anzeigeeinrichtung in Pfeilrichtung II gemäß dem mit dem erfindungsgemäßen Kennzeichnungssteil ausgestatteten Wasserzähler aus Fig. 1,
- **Fig. 3**: einen Längsschnitt durch das erfindungsgemäße Befestigungselement (geschnittener Bereich entsprechend der Schnittlinie I - I in Fig. 2)
- **Fig. 4**: eine Draufsicht auf einen flachen, ringscheibenförmigen Abschnitt eines Ausführungsbeispieles des erfindungsgemäßen Befestigungselementes,
- **Fig. 5**: eine Draufsicht auf einen flachen, ringscheibenförmigen Abschnitt eines Ausführungsbeispieles des erfindungsgemäßen Kennzeichnungselementes,
- **Fig. 6**: einen Längsschnitt durch das erfindungsgemäße Kennzeichnungselement (geschnittener Bereich entsprechend der Schnittlinie I - I in Fig. 2),
- **Fig. 7**: eine Teilansicht X des erfindungsgemäßen Kennzeichnungselements aus Fig. 6,
- **Fig. 8**: eine Teilansicht Y des erfindungsgemäßen Befestigungselementes aus Fig. 3, und
- **Fig. 9**: ein Ausführungsbeispiel für einen Eingriffes der Rastansätze des Befestigungselementes in die Rastansätze des Kennzeichnungselementes zur Veranschaulichung des Befestigungsablaufs.

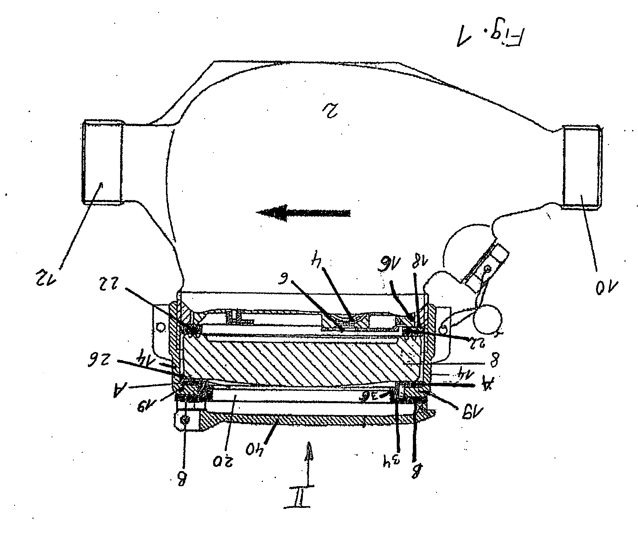

Wie in der Fig. 1 gezeigt ist, besteht ein an sich bekannter Wasserzähler aus einem Zählergehäuse 2 und einem darin eingesetzten Messwerk 4.

Das Zählergehäuse 2 weist einen Zulaufanschluss 10 und einen Ablaufanschluss 12 auf. Über diese Anschlüsse 10, 12 wird der Wasserzähler in einem Wasserleitungsnetz installiert, so dass im Wasserdurchlaufverfahren die jeweilige Verbrauchsmenge des Wassers im Messwerk 4 ermittelt und registriert wird.

Das Messwerk 4 umfasst eine Anzeigeeinrichtung 6, die durch eine Sichtscheibe 8 hindurch ablesbar ist und unter Zwischenschaltung der Sichtscheibe 8 mittels eines übermutterartigen Schraubringes 14 druckdicht gegen einen eine Gehäuseöffnung 16 umschließenden Dichtrand 18 des Zählergehäuses 2 verspannt ist. Hierzu weist der Schraubring 14 einen sich radial nach innen erstreckenden, umlaufenden, flanschartigen Ringkragen 19 auf, der eine Sichtöffnung 20 umschließt. Zwischen dem Dichtrand 18 des Zählergehäuses 2 und der Sichtscheibe 8 ist ein Dichtring 22 angeordnet.

Auf der gegenüberliegenden Seite der Sichtscheibe 8 ist erfindungsgemäß zwischen der über der Anzeigeeinrichtung 6 befindlichen Sichtscheibe 8 und dem umlaufenden die Sichtöffnung 20 umschließenden flanschartigen Ringkragen 19 des Schraubringes 14 ein Befestigungselement A angeordnet, welches insbesondere mittels einer Klemmverbindung mit dem Ringkragen 19 des Schraubrings am Zählergehäuse 2 fest verbunden ist.

Durch das Befestigungselement A ist auf dessen radial inneren Seite zwischen dem Ringkragen 19 und der Sichtscheibe 8 durch einen der Dicke des Befestigungselementes A entsprechender Abstand ein ringförmig umlaufender Spalt 26 gebildet.

Das Befestigungselement A besteht üblicherweise aus einem geeigneten Kunststoff und schützt die Sichtscheibe 8 beim druckdichten Verpressen durch Anziehen des Schraubringes 14.

Das Befestigungselement A ist weiterhin dafür vorgesehen ein Kennzeichnungselement B aufzunehmen, wobei das Kennzeichnungselement B mit dem Befestigungselement A mittels einer schnappbaren Formschlussverbindung fest miteinander verbunden ist.

Dabei ist das Kennzeichnungselement B für ein innenliegendes Einrasten mittels eines Rastansatzes 35 entlang einer Einführfläche 36 in einen Rastansatz 34 des Befestigungselements A vorgesehen, wobei das Kennzeichnungselement B in das Befestigungselement A axial einpressbar ist, was im folgenden auch als Schnappverbindung bezeichnet wird.

In einer besonderen Ausführungsform sind das Befestigungselement A und das Kennzeichnungselement B so ausgeführt, dass das Kennzeichnungselement B mit dem Befestigungselement A mittels einer Bajonettverschraubung verbunden ist.

Das Messwerk 4 ist in der **Fig. 1** lediglich bereichsweise angedeutet, weil es für die vorliegende Erfindung praktisch keine Bedeutung hat und wird daher auch nicht weiter beschrieben.

In einer vorteilhaften Ausgestaltung der Erfindung ist am Kennzeichnungselement B eine an ihrer Innenseite mit einer Kennzeichnung versehbare Abdeckung 40 befestigt, welche als Schutzdeckel oder Klappdeckel ausgeführt ist.

Die Abmessungen des Kennzeichnungselementes B sind, insbesondere bezüglich seines Außendurchmessers, derart an den Schutzdeckel 40 angepasst, das der Schutzdeckel 40 in seiner Verschlusslage das Kennzeichnungsteil B vollständig überdeckt.

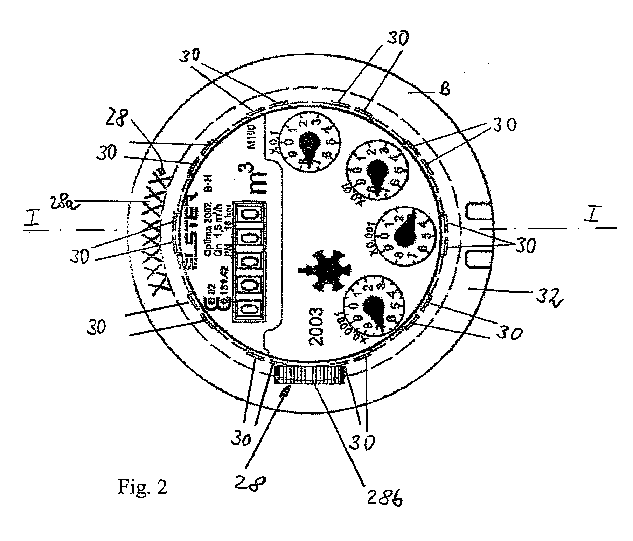

In der **Fig. 2** ist die dem Wasserzähler zugeordnete individuelle, gerätespezifische Kennzeichnung 28 dargestellt. Diese Kennzeichnung 28 besteht aus einer beispielhaft in **Fig. 2** dargestellten Ziffern- und/oder Buchstabenkombination 28a. Alternativ oder zusätzlich ist die Ausführung der Kennzeichnung 28 als sogenannter Barcode 28 b vorgesehen, wodurch ein automatisches Ablesen von codierten Daten ausführbar ist.

Die Anordnung bzw. die Lage der Kennzeichnung 28 auf dem Kennzeichnungselement B auf der den Rastansätzen 36 und dem Ringkragen 19 des Schraubrings 14 abgewandten Sichtfläche entspricht in vorteilhafter Weise im wesendlichen den bisher bei Wasserzählern üblichen Kennzeichnungen, da diese ebenfalls auf der Oberseite des Ringkragens 19 aufgebracht sind. Zum Aufbringen der Kennzeichnung 28 sind beispielsweise eine Laserbeschriftung, ein Thermotransfer oder ein Heißprägeverfahren geeignet.

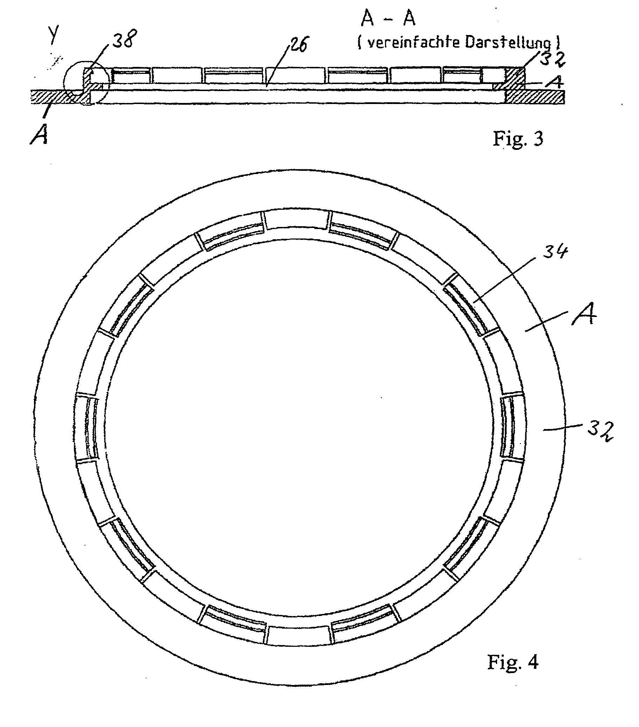

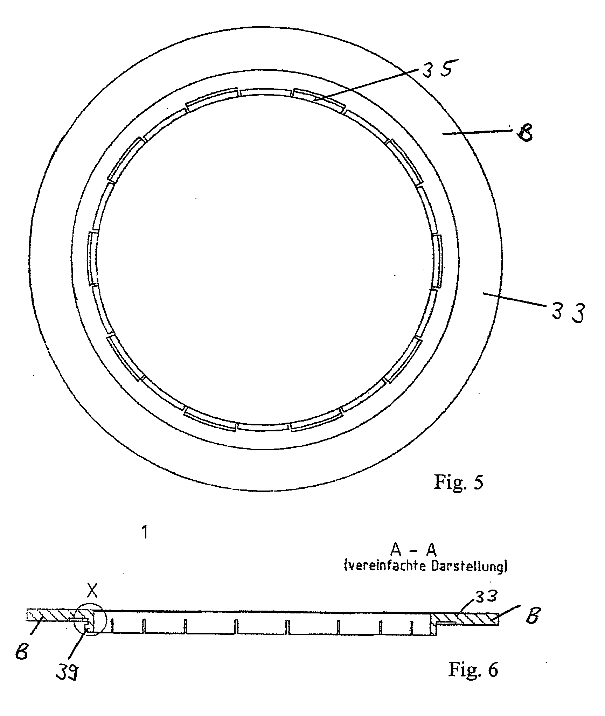

Das Befestigungselement A weist hierzu einen in den **Fig. 3** und 4 dargestellten flachen, ringscheibenförmigen Abschnitt 32 auf.

Der ringscheibenförmige Abschnitt 32 des Befestigungselementes A ist bezüglich seines Innen- und Außendurchmessers derart an den Schraubring 14 bzw. an den Ringkragen 19 angepasst, dass er zur Auflage an den Ringkragen 19 gelangt und durch Anziehen des Schraubrings 14 verpresst oder geklemmt wird. Damit ist das Befestigungselement A druckdicht mit der Sichtscheibe 8 und dem Ringkragen 19 des Schraubringes 14 durch ein Anziehen des Schraubringes 14 verpresst.

Das erfindungsgemäß vorgesehene zweiteiliges Kennzeichnungsteil (in **Fig. 5** und 6 gesondert dargestellt), ist so ausgeführt, dass auf das Kennzeichnungselement B auf der dem Messwerk 4 abgewandten Sichtfläche seines ringscheibenförmigen Abschnitts 33 die Kennzeichnung 28 aufgebracht ist.

Befestigungselement A und Kennzeichnungselement B sind mittels einer formschlüssigen Verbindung 30 so miteinander verbunden, dass eine Manipulation oder ein nachträgliches Entfernen der Kennzeichnung 28 nur durch eine Zerstörung des Kennzeichnungselementes B möglich ist.

In einer bevorzugten Ausführungsform ist das Befestigungselement A an dem Schraubring 14 über eine schnappbare Rastverbindung befestigt. Das Kennzeichnungselement B und das Befestigungselement A sind ebenfalls über eine schnappbare Rastverbindung miteinander verbunden. Zweckmäßigerweise sind hierzu das Kennzeichnungselement B und das Befestigungselement A ringförmig ausgebildet, so dass das Befestigungselement A an dem Ringkragen 19 des Schraubringes 14 und das Kennzeichnungselement B am Befestigungselement A befestigt, insbesondere eingerastet werden.

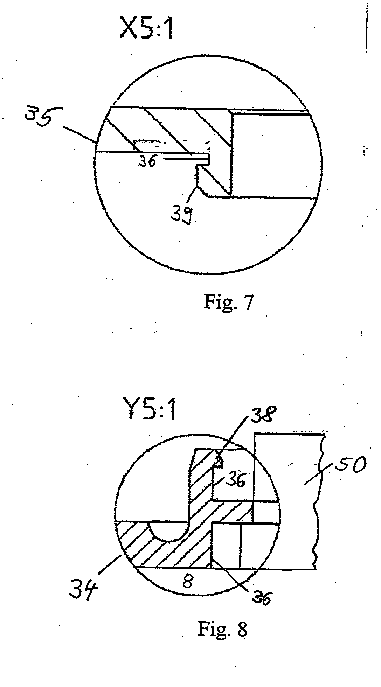

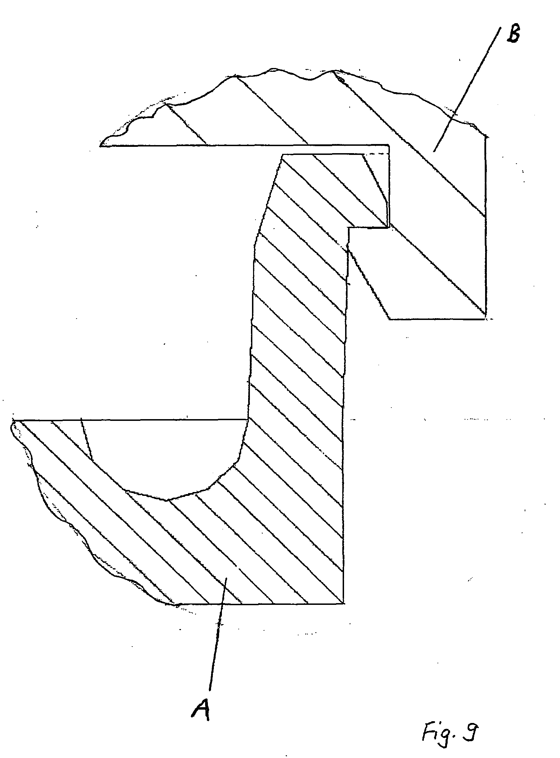

Ausgehend vom radial inneren Rand des ringförmigen Abschnitts 32 weist das Befestigungselement A mindestens zwei - vorzugsweise jedoch - wie in der **Fig. 4** dargestellt - zehn Rastansätze 34 auf, die sich im montierten Zustand, welcher beispielhaft in der **Fig. 9** dargestellt ist, durch die vom Ringkragen 19 umschlossene Sichtöffnung 20 hindurch erstrecken und mit radial nach innen weisenden Rastnocken 38 (vgl. **Fig.** 8), welche bevorzugt als Rastnase ausgeführt sind, für eine formschlüssige Verbindung mit dem Kennzeichnungselement B vorgesehen sind, indem sie das Kennzeichnungselement B formschlüssig untergreifen.

Um mittels der formschlüssigen Verbindung 30 eine weitgehende Unlösbarkeit des Kennzeichenelementes B am Befestigungselement A zu erreichen, weist jede Rastnocke 38 (vgl. **Fig.** 3 und 8) des Befestigungselementes A einen Hinterschneidungs- bzw. Wirkflächenwinkel ≥ 90° auf.

Die Rastansätze 34 des Befestigungselementes A sind grundsätzlich geringfügig radialelastisch beweglich, wobei aber die radiale, elastische Bewegung insoweit möglich ist, dass das Kenzeichnungselement B zerstörungsfrei in das Befestigungselement A einrastbar ist. Die Rastansätze 34 des Befestigungselementes A sind jedoch derart steif und formstabil, dass ein beabsichtigtes Entfernen oder unbeabsichtigtes Lösen des Kennzeichnungselementes B vom Befestigungselement A ohne die Zerstörung des Kennzeichnungselementes B nicht möglich ist.

Um eine ausreichende Formstabilität der Rastansätze 34 des Befestigungselementes A zu erreichen, ist jeder Rastansatz 34 des Befestigungselementes A in vorteilhafter Weise in einer Bogenform ausgeführt, woraus eine relativ hohe Steifigkeit der Rastansätze 34 des Befestigungselementes A resultiert, so dass beim Einrasten deren radiale Bewegung hauptsächlich durch eine elastische Verformung im Bereich des ringscheibenförmigen Abschnitts 32 erfolgt.

Das Kennzeichnungselement B weist zum Einrasten in das Befestigungselement A einen in den Fig. 5 und 6 dargestellten flachen, weiteren ringscheibenförmigen Abschnitt 33 auf, welcher auf der Sichtscheibe 8 abgewandten Oberseite des Ringkragens 19 des Schraubringes 14 aufliegt.

Ausgehend vom radial inneren Rand des ringförmigen Abschnitts 33 des Kennzeichnungselementes B weist das Kennzeichnungselement B mindestens zwei - vorzugsweise jedoch - wie in der Fig. 5 dargestellt - zehn Rastansätze 34 auf, die sich im montierten Zustand, welcher beispielhaft in der Fig. 9 dargestellt ist, durch die vom Befestigungselement B umschlossene Sichtöffnung 20 hindurch erstrecken und mit radial nach außen weisenden Rastnocken 39 des Kennzeichnungselementes B, welche bevorzugt als Rastnase ausgeführt sind, für den Eingriff in die Einführfläche 36 das Befestigungselement A formschlüssig untergreifen, d.h. formschlüssig in das Befestigungselement B eingreifen (vgl. auch Fig. 9).

Um mittels der formschlüssigen Verbindung 30 eine weitgehende Unlösbarkeit des Kennzeichnungselementes am Befestigungselement A zu erreichen, weist jede Rastnocke 39 (vgl. Fig. 6 und 7) des Kennzeichnungselementes B an der in das Befestigungselement eingreifenden Seite einen Hinterschneidungs- bzw. Wirkfiächenwinkel ≥ 90° auf.

Zum Einsetzen des Kennzeichnungselementes B in das Befestigungselement A ist es vorteilhaft, wenn jeder Rastnocke 39 des Kennzeichnungselementes B am freien, in Fügerichtung weisenden Ende eine äußere Einführfläche 36 aufweist (vgl. Fig. 7), die beispielsweise in Form einer Fase oder äußeren Anfasung ausgebildet ist.

Die Rastansätze 39 des Kennzeichnungselementes B sind grundsätzlich geringfügig radialelastisch beweglich, wobei aber die radiale, elastische Bewegung insoweit möglich ist, dass das Kenzeichnungselement B zerstörungsfrei in das Befestigungselement A einrastbar ist. Die Rastansätze 34 des Kennzeichnungselementes B sind ebenfalls derart steif und formstabil, dass ein unbeabsichtigtes Lösen des Kennzeichnungselementes B vom Befestigungselement A ausgeschlossen ist.

Um eine ausreichende Formstabilität und einen optimalen Eingriff der Rastansätze 35 des Kennzeichnungselementes in die Rastansätze 34 des Befestigungselementes A zu erreichen, ist in einer Bogenform ausgeführt, woraus eine relativ hohe Steifigkeit der Rastansätze 35 des Kennzeichnungselementes B resultiert, so dass beim Einrasten deren radiale Bewegung hauptsächlich durch eine elastische Verformung im Bereich des ringscheibenförmigen Abschnittes 33 erfolgt.

In der **Fig. 8** ist das Befestigungselement und der Einbau einer Halteplatte 50 zur Aufnahme eines Kontakt- oder Pulsgebers aufgezeigt, wobei der Kontakt- oder Pulsgeber zwischen der dem Kennzeichnungselement abgewandten Seite des Befestigungselementes und der Sichtscheibe angeordnet ist.

### Bezugszeichenliste

- A: Befestigungselement
- B: Kennzeichnungselement
- 2: Zählergehäuse
- 4: Messwerk
- 6: Anzeigeeinrichtung
- 8: Sichtscheibe
- 10: Zulaufanschluss
- 12: Ablaufanschluss
- 14: Schraubring
- 16: Gehäuseöffnung
- 18: Dichtrand
- 19: Ringkragen
- 20: Sichtöffnung oder Durchbruch der Halteplatte
- 22: Dichtring
- 26: Spalt
- 28: Kennzeichnung
- 28a: Ziffern- und/oder Buchstabenkombination
- 28b: Barcode
- 30: Rastverbindung
- 32: ringscheibenförmiger Abschnitt des Befestigungselementes
- 33: ringscheibenförmiger Abschnitt des Kennzeichnungselementes
- 34: Rastansatz des Befestigungselementes
- 35: Rastansatz des Kennzeichnungselementes
- 36: Einführfläche
- 38: Rastnocke an Befestigungselement
- 39: Rastnocke am Kennzeichnungselement
- 40: Abdeckung, Schutzdeckel
- 50: Halteplatte zur Aufnahme eines Kontakt- oder Pulsgebers

## Patentansprüche

1. Wasserzähler mit einem in einem Zählergehäuse (2) angeordneten Messeinsatz (4), mit je einem dem Zählergehäuse (2) zugeordneten Zulaufanschluss (10) und Ablaufanschluss (12) und mit einer Anzeigeeinrichtung (6), wobei dem Zählergehäuse (2) eine individuelle, gerätespezifische Kennzeichnung (28) zugeordnet ist, welche auf einem separaten Kennzeichnungsteil angegeben ist, **dadurch gekennzeichnet, dass** das Kennzeichnungsteil zweiteilig ausgebildet ist und aus einem Befestigungselement (A) und einem Kennzeichnungselement (B) zusammengesetzt ist.

2. Wasserzähler nach Anspruch 1, **dadurch gekennzeichnet, dass** das Befestigungselement (A) ein unlösbar mit dem Zählergehäuse (2) verbundenes und/oder gegen ein nachträgliches Entfernen vom Zählergehäuse (2) gesichertes Teil ist.

3. Wasserzähler nach Anspruch 1 oder 2, **dadurch gekennzeichnet, dass** auf dem Kennzeichnungselement (B) die Kennzeichnung (28) aufgebracht ist.

4. Wasserzähler nach einem der vorherigen Ansprüche, **dadurch gekennzeichnet, dass** das Befestigungselement (A) und das Kennzeichnungselement (B) mittels einer Kraftschluss- und /oder Formschlussverbindung fest miteinander verbunden sind.

5. Wasserzähler nach einem der vorherigen Ansprüche, **dadurch gekennzeichnet, dass** das Befestigungselement (A) mittels einer Klemmverbindung mit dem Ringkragen eines Schraubringes (14) am Zählergehäuse (2) befestigt ist.

6. Wasserzähler nach einem der vorherigen Ansprüche, **dadurch gekennzeichnet, dass** das Befestigungselement (A) und das Kennzeichnungselement (B) ringförmig ausgebildet sind.

7. Wasserzähler nach einem der vorherigen Ansprüche, wobei das Messwerk (4) und die Anzeigeeinrichtung (6) mittels einer Sichtscheibe (8) abgedeckt sind, **dadurch gekennzeichnet, dass** die Sichtscheibe (8) zwischen dem Befestigungselement (A) und einem Dichtring (22) angeordnet ist.

8. Wasserzähler nach einem der vorherigen Ansprüche, **dadurch gekennzeichnet, dass** das Befestigungselement (A) zur Befestigung an einem flanschartigen Ringkragen (19) des Schraubringes (14) als Druck- und Gleitring ausgebildet ist.

9. Wasserzähler nach einem der vorherigen Ansprüche, **dadurch gekennzeichnet, dass** das Kennzeichnungselement (B) mittels einer Rastverbindung mit dem Befestigungselement (A) verbunden ist.

10. Wasserzähler nach einem der vorherigen Ansprüche, **dadurch gekennzeichnet, dass** das Kennzeichnungselement (B) in das Befestigungselement (A) axial eingepresst ist.

11. Wasserzähler nach einem der Ansprüche 1 bis 9, **dadurch gekennzeichnet, dass** das Kennzeichnungselement (B) mit dem Befestigungselement (A) mittels einer Bajonettverschraubung verbunden ist.

12. Wasserzähler nach einem der vorherigen Ansprüche, **dadurch gekennzeichnet, dass** die Sichtscheibe (8) mittels des Dichtringes (22) und des Schraubrings (14) druckdicht gegen einen eine Gehäuseöffnung (16) umschließenden Dichtrand (18) des Zählergehäuses (2) verspannt ist, wobei zwischen der Sichtscheibe (8) und dem umlaufenden, eine Sichtöffnung (20) umschließenden flanschartigen Ringkragen (19) des Schraubringes (14) das Befestigungselement (A) angeordnet ist.

13. Wasserzähler nach einem der vorherigen Ansprüche, **dadurch gekennzeichnet, dass** das Kennzeichnungselement (B) mit einem flachen, ringscheibenförmigen Abschnitt (33) auf der der Sichtscheibe (8) abgewandten Oberseite des Ringkragens (19) des Schraubringes (14) aufliegt und mittels mindestens zwei am Ringumfang im Abstand zueinander angeordneten Rastansätzen (35) durch die vom Ringkragen (19) umschlossene Sichtöffnung (20) hindurch formschlüssig in einem durch das Befestigungselement (A) zwischen dem Ringkragen (19) des Schraubrings (14) und der Sichtscheibe (8) gebildeten Spalt (26) eingreift.

14. Wasserzähler nach einem der vorherigen Ansprüche, **dadurch gekennzeichnet, dass** das Befestigungselement (A) mit einem flachen, ringscheibenförmigen Abschnitt (32) auf der der Sichtscheibe (8) zugewandten Oberseite des Ringkragens (19) des Schraubringes (14) aufliegt und mittels mindestens zwei, am Ringumfang im Abstand zueinander angeordneten Rastansätzen (34) durch die vom Ringkragen (19) umschlossene Sichtöffnung (20) hindurch formschlüssig mit dem Kennzeichnungselement (B) verbunden ist.

15. Wasserzähler nach einem der vorherigen Ansprüche, **dadurch gekennzeichnet, dass** jeder Rastansatz (34, 35) zum formschlüssigen Hintergreifen des Kennzeichnungselementes (B) in das Befestigungselement (A) eine radial nach innen oder auβen weisende Rastnocke (38, 39) aufweist.

16. Wasserzähler nach einem der vorherigen Ansprüche, **dadurch gekennzeichnet, dass** jeder Rastansatz (34, 35) Ende eine Einführfläche (36) aufweist, welche als Fase ausgeführt ist.

17. Wasserzähler nach einem der vorherigen Ansprüche, **dadurch gekennzeichnet, dass** das Kennzeichnungsteil (B) aus Kunststoff bestellt ist.

18. Wasserzähler nach einem der vorherigen Ansprüche, **dadurch gekennzeichnet, dass** die Kennzeichnung (28) eine Ziffern- und/oder Buchstabenkombination (28a) und/oder ein Barcode (28b) ist und auf der der Sichtscheibe (8) abgewandten Oberseite des ringscheibenförmigen Abschnitts (35) des Kennzeichnungselementes (B) angeordnet ist.

19. Wasserzähler nach einem der vorherigen Ansprüche, **dadurch gekennzeichnet, dass** am Kennzeichnungselement (B) eine Abdeckung (40) zum Abdecken der Sichtöffnung (20) befestigt ist.

20. Wasserzähler nach einem der vorherigen Ansprüche, **dadurch gekennzeichnet, dass** die Abmessungen des Kennzeichnungselement (B), insbesondere bezüglich seines Außendurchmessers, derart an die Abdeckung (40) angepasst sind, das die Abdeckung (40) in ihrer Verschlusslage das Kennzeichnungsteil (B) vollständig überdeckt.

21. Wasserzähler nach einem der vorherigen Ansprüche, **dadurch gekennzeichnet, dass** auf die dem Zählergehäuse (2) zugewandte mit dem Kennzeichnungselement (B) verbundene Seite der Abdeckung (40) eine weitere Kennzeichnung (28) aufbringbar ist.

22. Wasserzähler nach einem der vorherigen Ansprüche, **dadurch gekennzeichnet, dass** der Wasserzähler einen Kontakt- oder Pulsgeber aufweist

23. Wasserzähler nach einem der vorherigen Ansprüche, **dadurch gekennzeichnet, dass** der Wasserzähler eine Halteplatte (50) zur Aufnahme eines Kontakt- oder Pulsgebers aufweist
